# FASCICULE DE BREVET EUROPEEN

(11) **EP 3 981 056 B1**
(45) Date de publication et mention de la délivrance du brevet: **24.05.2023**
(21) Numéro de dépôt: 19731887.6
(22) Date de dépôt: 05.06.2019
(51) Int. Cl.: H02J 7/00, H01M 10/44, H02J 7/34, H02J 9/06, H01M 10/42

(54) **DISPOSITIF ET SYSTEME RECHARGEABLES DE STOCKAGE D'ENERGIE ELECTRIQUE, VEHICULE ET INSTALLATION MUNIS D'UN TEL SYSTEME**
WIEDERAUFLADBARE ELEKTRISCHE ENERGIESPEICHERVORRICHTUNG UND SYSTEM, FAHRZEUG UND ANLAGE MIT EINEM SOLCHEN SYSTEM
RECHARGEABLE ELECTRICAL ENERGY STORAGE DEVICE AND SYSTEM, VEHICLE AND FACILITY PROVIDED WITH SUCH A SYSTEM

(43) Date de publication de la demande: 13.04.2022
(73) Titulaire: Blue Solutions, 29500 Ergué Gabéric (FR)
(72) Inventeur: SELLIN, Christian, 29900 CONCARNEAU (FR); COLIN, Jacques, 29000 QUIMPER (FR)
(74) Mandataire: IPAZ
(86) Numéro de dépôt international: PCT/EP2019/064733
(87) Numéro de publication internationale: WO 2020/244758

(56) Documents cités:
- EP-A1- 3 467 993
- JP-A- 2008 086 148
- US-A1- 2007 273 216
- US-A1- 2017 338 690
- US-A1- 2019 160 972

## Description

La présente invention concerne un système rechargeable de stockage d'énergie électrique. Elle concerne également un véhicule électrique équipé d'un tel système, et une installation électrique équipée d'un tel système.

Le domaine de l'invention est le domaine des batteries rechargeables.

### État de la technique

On connait des véhicules électriques alimentés par plusieurs dispositifs rechargeables d'énergies électriques embarqués. Ces dispositifs sont également appelés « pack batteries » et comprennent, chacun, une ou plusieurs batteries.

Un véhicule électrique comprend un nombre total de packs batteries défini pour l'autonomie requise pour le véhicule. A un instant donné, une partie uniquement des packs batteries est suffisante pour répondre aux appels de puissance du véhicule. Ainsi, pour augmenter leurs durées de vie, les packs batteries sont généralement utilisés à tour de rôle, par exemple par groupes.

Pour ce faire, une électronique de gestion permet de basculer d'un pack batterie à un autre, par exemple lors d'un arrêt du véhicule, et généralement en fonction du niveau de charge global des batteries.

Une première technique de basculement d'un premier pack batterie à un deuxième pack batterie consiste à déconnecter le premier pack batterie avant de connecter le deuxième pack batterie. Or, dans ce cas, il y a une perte d'alimentation électrique dans le véhicule, ce qui n'est pas acceptable.

Une deuxième technique consiste à connecter le deuxième pack batterie avant de déconnecter le premier pack batterie. Cette technique assure une continuité d'alimentation du véhicule.

Cependant, avec cette deuxième technique, il existe une période lors de laquelle les deux packs batteries sont utilisés simultanément. Les inventeurs ont constaté que cette utilisation simultanée peut induire un retour de courant du pack batterie le plus chargé vers le pack batterie le moins chargé. Ce retour de courant dégrade l'un des packs batteries.

Le document US2017/0338690 A1 décrit par exemple un système selon le préambule de la revendication 1 permettant le basculement d'une alimentation d'un dispositif de stockage à un autre dispositif de stockage.

Un but de la présente invention est de remédier à ces inconvénients.

Un but de l'invention est de proposer un système rechargeable de stockage d'énergie électrique comprenant des dispositifs rechargeables dont la durée de vie est mieux préservée, lors du basculement vers un autre un autre dispositif rechargeable de stockage d'énergie électrique tout en assurant une continuité d'alimentation.

### Exposé de l'invention

L'invention permet d'atteindre au moins l'un de ces buts par un système rechargeable de stockage d'énergie électrique selon la revendication 1.

Ainsi, lors d'un basculement entre dispositifs de stockage, il est possible de protéger les dispositifs de stockage contre un retour de courant, tout en proposant une continuité d'alimentation lors dudit basculement.

En effet, avant de réaliser un basculement vers un autre dispositif de stockage, la décharge du dispositif de stockage est d'abord permutée vers la branche de dérivation d'abord en fermant le contacteur secondaire, puis en ouvrant le contacteur principal : le dispositif de stockage se décharge alors au travers de la branche de dérivation uniquement.

A ce moment-là, il est possible de réaliser un basculement vers un autre dispositif de stockage avec continuité d'alimentation. Du fait de la présence de la diode dans la branche de dérivation, l'autre dispositif de stockage ne peut se décharger dans le dispositif de stockage et il n'y aura donc pas de retour de courant.

Dans la présente demande, par « basculement » on entend l'utilisation en décharge d'un deuxième dispositif de stockage à la place d'un premier dispositif de stockage, au sein d'un ensemble de dispositifs de stockage, de sorte que le premier dispositif de stockage n'est plus utilisé en décharge.

Dans la présente demande, par « permutation » on entend le basculement de la décharge d'un dispositif de stockage vers la branche de dérivation de sorte que ledit dispositif ne se décharge plus au travers du contacteur principal, mais au travers de la branche de dérivation.

Le dispositif de stockage peut se présenter sous la forme d'un ensemble monobloc.

En particulier, l'ensemble des composants du dispositif de stockage peut être disposé dans une coque rigide renfermant lesdits composants.

Le dispositif de stockage peut comporter un unique contacteur principal.

Alternativement, le dispositif de stockage peut comprendre plusieurs contacteurs principaux en série avec le module de stockage, disposés, chacun, du côté d'une borne électrique dudit ensemble.

Autrement dit, le dispositif de stockage peut par exemple comprendre un contacteur principal disposé de chaque côté du module de stockage.

Suivant un exemple de réalisation particulier, au moins un contacteur principal, respectivement au moins un contacteur secondaire, peut être un contacteur unipolaire, ou un contacteur multipolaire tel qu'un contacteur 2 pôles ou un contacteur 4 pôles.

Dans une version particulière, mais nullement limitative, le dispositif de stockage peut comprendre un module de commande de l'au moins un contacteur principal, respectivement de l'au moins un contacteur secondaire.

Un tel module de commande peut se présenter sous la forme d'une carte électrique, ou électronique, comportant des composants analogiques ou numériques.

Un tel module de commande peut être intégré au dispositif de stockage, ou être disposé à l'extérieur du dispositif de stockage.

Un tel module de commande peut être individuel et dédié au dispositif de stockage, ou commun à plusieurs dispositifs de stockage.

Le module de commande peut être configuré pour commander les contacteurs du dispositif de stockage pour réaliser une permutation de la décharge dudit dispositif de stockage vers la branche de dérivation au sein dudit dispositif de stockage, avant un basculement vers un autre dispositif de stockage.

En particulier, le module de commande peut être configuré pour réaliser une permutation de la décharge du dispositif de stockage vers la branche de dérivation, en commandant :
- d'abord, la fermeture (ou le maintien en position fermée) du contacteur secondaire,
- puis ouverture de l'au moins un contacteur principal.

Le fait d'ouvrir le contacteur principal après la fermeture du contacteur secondaire permet de fournir un courant de manière continue et ne pas avoir de coupure de courant, lors d'une phase de décharge du dispositif.

Le module de commande peut en outre être configuré pour commander l'ouverture du contacteur secondaire et l'ouverture, ou le maintien en position ouverte de l'au moins un contacteur principal, lorsque le module de stockage délivre un courant de valeur nulle. Par valeur « valeur nulle », on entend un courant dont la valeur est nulle ou inférieure à un seuil de référence prédéterminé correspondant à un courant nul.

Ainsi, il est possible d'utiliser le dispositif de stockage même lorsque le niveau de charge de ce dernier devient très faible. Cela permet d'utiliser toute l'énergie stockée dans ledit dispositif de stockage.

Le dispositif peut en outre comprendre un capteur de courant, respectivement un capteur de tension, mesurant la valeur du courant délivré par le, respectivement la valeur de la tension aux bornes du, module de stockage. La, ou les valeurs mesurées, peuvent être utilisées pour déterminer le niveau de charge du dispositif de stockage.

Alternativement, cette ou ces valeurs peuvent être mesurées/fournies par au moins un appareil ou capteur externe au dispositif de stockage.

Selon la présente invention, il est proposé un système rechargeable de stockage d'énergie électrique comprenant plusieurs dispositifs rechargeables de stockage d'énergie électrique, lesdits dispositifs de stockage étant agencés en parallèle les uns avec les autres.

Le système de stockage comporte un unique circuit électrique auquel sont reliés tous les dispositifs de stockage.

Lors d'une phase de décharge du système selon l'invention, les dispositifs de stockage dudit système peuvent être utilisés à tour de rôle.

Le nombre de dispositifs de stockage utilisés simultanément peut être variable, en fonction :
- de la valeur du courant total demandé au système de stockage selon l'invention, et
- de la valeur du courant délivré par chaque dispositif de stockage.

Le système de stockage selon l'invention comprend un unique module de commande commun à plusieurs, en particulier à tous les, dispositifs de stockage.

Le module de commande commun est agencé pour réaliser :
- au sein d'un, en particulier de chaque, dispositif de décharge : une permutation de la décharge vers la branche de dérivation dudit dispositif de stockage ; et
- au sein dudit système : un basculement de la décharge d'un des dispositifs de stockage vers un autre des dispositifs de stockage.

Pour ce faire, le module de commande est agencé pour commander les contacteurs principal et secondaire de chaque dispositif de stockage

Pour réaliser un basculement d'un premier dispositif de stockage vers un deuxième dispositif de stockage, le module de commande peut être agencé pour réaliser :
- d'abord une permutation de la décharge vers la branche de dérivation au sein dudit premier dispositif de stockage,
- puis, un basculement dudit premier dispositif de stockage vers ledit deuxième dispositif de stockage

Suivant un mode de réalisation, au sein de chaque dispositif de décharge, la permutation de la décharge vers la branche de dérivation est réalisée tel que décrit plus haut.

Suivant un mode de réalisation non limitatif, le basculement d'un dispositif de stockage à un autre peut être déclenché en fonction d'une valeur moyenne des niveaux de charge de tous les dispositifs de stockage.

Suivant un mode de réalisation, le basculement peut être réalisé lorsque cette valeur moyenne varie d'un pourcentage prédéterminé. Ce pourcentage peut être fixe, ou variable, ou encore une combinaison des deux.

Suivant un exemple de réalisation, le pourcentage peut être :
- constant lorsque la valeur moyenne des niveaux de charge est comprise entre 50% et 100% ;
- variable lorsque la valeur moyenne des niveaux de charge est inférieur à 50%.

Suivant un exemple de réalisation, il peut être envisagé d'utiliser tous les dispositifs de stockage lorsque la valeur moyenne des niveaux de charge est inférieure à 5%.

Pour réaliser un basculement de la décharge d'un premier dispositif de stockage vers un autre dispositif de stockage, le module de commande est configuré pour commander :
- d'abord la fermeture de l'au moins un contacteur principal du deuxième dispositif de stockage,
- puis l'ouverture du contacteur secondaire du premier dispositif de stockage, de sorte qu'il existe toujours un courant non nul délivré par ledit ensemble de stockage.

Ainsi, il n'y a pas de rupture, ou de discontinuité, dans la délivrance d'un courant par le système de stockage selon l'invention, lors d'une phase de décharge.

Suivant encore un autre aspect de la présente invention, il est proposé un véhicule électrique comprenant un système de stockage selon l'invention.

Un tel véhicule est en particulier un véhicule qui est mis en mouvement uniquement par des dispositifs de stockage rechargeables depuis une source externe.

Un tel véhicule peut être une voiture électrique, un bus électrique, un car électrique, un tram-bus, un bateau, un camion, un téléphérique, un ascenseur, un monte-charge, une grue, etc.

Suivant encore un aspect de la présente invention, il est proposé une installation stationnaire comprenant un système de stockage selon l'invention.

Une telle installation électrique peut être une station de charge électrique pour véhicules de transport, électriques ou hybrides, ou une station d'alimentation électrique d'un bâtiment, d'un complexe ou d'un appareil électrique/électronique de communication.

Une telle installation électrique peut être une station de régulation ou de lissage, ou encore de stockage tampon, d'énergie électrique, par exemple fournie par un réseau électrique ou des moyens de production d'électricité. Une telle station de régulation ou de lissage permet de stocker de l'énergie électrique en surplus lors d'une période de faible consommation, respectivement de forte production, et de restituer l'énergie électrique stockée lors d'une période de forte consommation, respectivement faible production.

Avantageusement, l'installation selon l'invention peut comprendre un moyen de production d'énergie électrique à partir d'une source renouvelable, tel qu'au moins un panneau solaire et/ou au moins une éolienne et/ou au moins une hydrolienne.

L'énergie produite par un tel moyen peut être utilisée pour recharger au moins un dispositif rechargeable de stockage d'énergie électrique.

Alternativement, ou en plus, au moins un dispositif rechargeable de stockage d'énergie électrique peut être rechargé depuis le secteur.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un dispositif rechargeable de stockage d'énergie électrique ;
- la FIGURE 2 est une représentation schématique d'un exemple de réalisation non limitatif d'un système rechargeable de stockage d'énergie électrique selon l'invention ;
- les FIGURES 3a-3e sont des représentations schématiques de différentes configurations du système de la FIGURE 2 ;
- la FIGURE 4 est une représentation schématique d'un exemple de réalisation non limitatif d'un véhicule selon l'invention ; et
- la FIGURE 5 est une représentation schématique d'un exemple de réalisation non limitatif d'une installation selon l'invention.

Sur les figures, les éléments communs à plusieurs figures conservent la même référence.

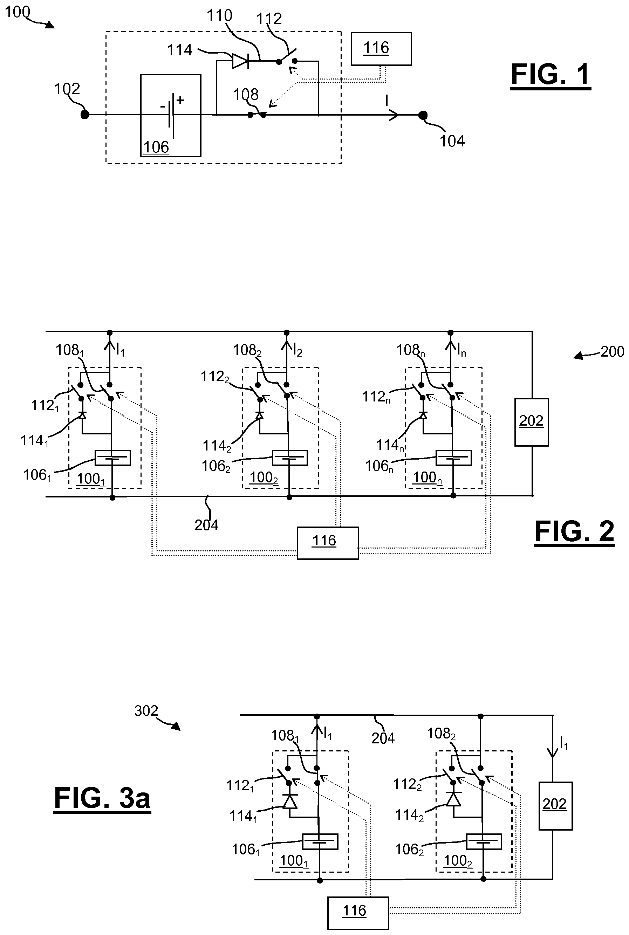

La FIGURE 1 est une représentation schématique d'un exemple de réalisation non limitatif d'un dispositif rechargeable de stockage d'énergie électrique.

Le dispositif 100, représenté sur la FIGURE 1, comporte deux bornes électriques 102 et 104 permettant de relier ledit dispositif 100 à un circuit électrique, tel que par exemple le circuit électrique d'alimentation d'un véhicule électrique.

Le dispositif 100 comprend un module 106, rechargeable, de stockage d'énergie électrique par effet capacitif, qui peut être formé par une ou plusieurs batteries capacitives. Chaque batterie capacitive est formée par un ensemble de condensateurs pour stocker de l'énergie électrique. Lorsqu'il est en décharge, le module de stockage 106 délivre un courant I circulant vers la borne 104.

Entre ses bornes 102 et 104, le dispositif de stockage 100 comporte un contacteur 108, appelé contacteur principal. Dans l'exemple représenté sur la FIGURE 1, le contacteur 108 se trouve entre le module de stockage 106 et la borne 104. Le contacteur 108 est commandable entre une position ouverte ne laissant pas passer le courant I, et une position fermée laissant passer le courant I. Dans sa position fermée, le contacteur 108 relie le module de stockage 106 à la borne 104. Sur la FIGURE 1, le contacteur principal 108 est représenté en position fermée.

Le dispositif de stockage 100 comprend une branche 110 de dérivation du contacteur principal 108. La branche de dérivation 110 comporte un contacteur 112, dit contacteur secondaire, en série avec une diode 114 passante uniquement vers la borne 104. Lorsque le contacteur secondaire 112 est fermé la branche de dérivation 110 relie le module de stockage 106 à la borne 104, quelle que soit la position du contacteur principal 108. Sur la FIGURE 1, le contacteur secondaire 112 est représenté en position ouverte.

La diode 114 empêche le passage du courant de la borne 104 vers le module de stockage 106, au travers de la branche de dérivation 110.

Les contacteurs principal 108 et secondaire 112 sont commandés par un module de commande 116 qui peut faire partie ou non du dispositif de stockage 100. De plus, le module de commande 116 peut être individuel et dédié au dispositif de stockage 100, ou être commun à plusieurs dispositifs de stockage d'un système de stockage.

Le module de commande 116 est configuré pour commander une permutation de la décharge du module de stockage 106 vers la branche de dérivation110 de sorte que le module de stockage se décharge uniquement au travers de ladite branche de dérivation 110. Cette permutation est en particulier réalisée avant un basculement de la décharge dudit dispositif de stockage 100, vers un autre dispositif de stockage.

Pour réaliser la permutation de la décharge, le module de commande 116 commande les contacteurs principal 108 et secondaire 112 de la manière suivante :
- d'abord le contacteur secondaire 112 est commandé pour passer en position fermée : à ce moment le module 106 se décharge au travers à la fois du contacteur principal 108 et de la branche de dérivation 110 ; et
- puis le contacteur principal 108 est commandé pour passer en position ouverte : à ce moment le module 106 se décharge uniquement au travers de la branche de dérivation 110. Dans cette configuration, il ne peut pas y avoir de courant de retour vers le module de stockage 106 car la diode 114 empêche le passage d'un tel courant.

La FIGURE 2 est une représentation schématique d'un exemple de réalisation non limitatif d'un système rechargeable de stockage d'énergie électrique selon l'invention.

Le système 200 comprend « n » dispositifs rechargeables de stockage d'énergie électrique par effet capacitifs : 100₁-100ₙ.

Chaque dispositif 100ᵢ, pour « i » compris entre 1 et n, peut être identique au dispositif 100 de la FIGURE 1.

Tel que montré sur la FIGURE 2, le système 200 comprend un unique module de commande 116 commun à tous les dispositifs de stockage 100₁-100ₙ. Le module de commande commun 116 est agencé pour commander les contacteurs principaux et secondaires de chaque dispositif de stockage 100ᵢ faisant partie du système 200.

Le courant délivré par chaque dispositif de stockage, respectivement 100₁-100ₙ, est noté respectivement I₁-Iₙ sur la FIGURE 2.

Le système 200 est utilisé pour alimenter au moins un appareil 202, tel que par exemple un moteur électrique d'un véhicule électrique ou un appareil auxiliaire se trouvant à bord d'un véhicule électrique, grâce à un circuit électrique 204 reliant les dispositifs de stockage 100₁-100ₙ audit appareil 202.

Le système 200 peut être agencé de sorte que plusieurs, en particuliers tous les, dispositifs de stockage 100₁-100ₙ sont utilisés en même temps.

Alternativement, le système 200 peut être agencé de sorte que chaque dispositif de stockage 100ᵢ est utilisé à tour de rôle. Dans ce cas, seul un dispositif de stockage 100ᵢ est utilisé à la fois, sauf, éventuellement, lors du basculement de l'alimentation d'un dispositif de stockage vers un autre dispositif de stockage.

Le module de commande 116 est agencé pour réaliser :
- d'une part, une permutation de la décharge au sein de chaque dispositif de stockage 100ᵢ ; et
- d'autre part, un basculement de la décharge d'un dispositif de stockage vers un autre dispositif de stockage.

En particulier, le module de commande est agencé pour réaliser une permutation de la décharge au sein d'un dispositif de stockage avant de réaliser un basculement de la décharge depuis ce dispositif de stockage vers un autre dispositif de stockage.

Les FIGURES 3a-3e sont des représentations schématiques de différentes configurations du système 200 de la FIGURE 2, lorsque celui-ci est agencé pour une utilisation d'un dispositif de stockage à la fois.

Par soucis de clarté, seuls deux dispositifs de stockage 100₁ et 100₂ sont représentés sur les FIGURES 3a-3e. Bien entendu, le nombre de dispositifs de stockage n'est pas limité à deux.

De plus, l'appareil 202 est considéré comme étant un auxiliaire d'un véhicule électrique.

Dans la configuration 302, représentée sur la FIGURE 3a :
- le contacteur principal 108₁ du dispositif de stockage 100₁ est fermé, et le contacteur secondaire 112₁ du dispositif stockage 100₁ est ouvert ; et
- le contacteur principal 108₂ et le contacteur secondaire 112₂ du dispositif de stockage 100₂ sont ouverts.

Dans cette configuration 302, l'auxiliaire 202 est alimenté uniquement par le dispositif de stockage 100₁. En d'autres termes, la valeur du courant entrant dans l'auxiliaire 202 est sensiblement égale à la valeur du courant I₁ sortant du dispositif de stockage 100₁.

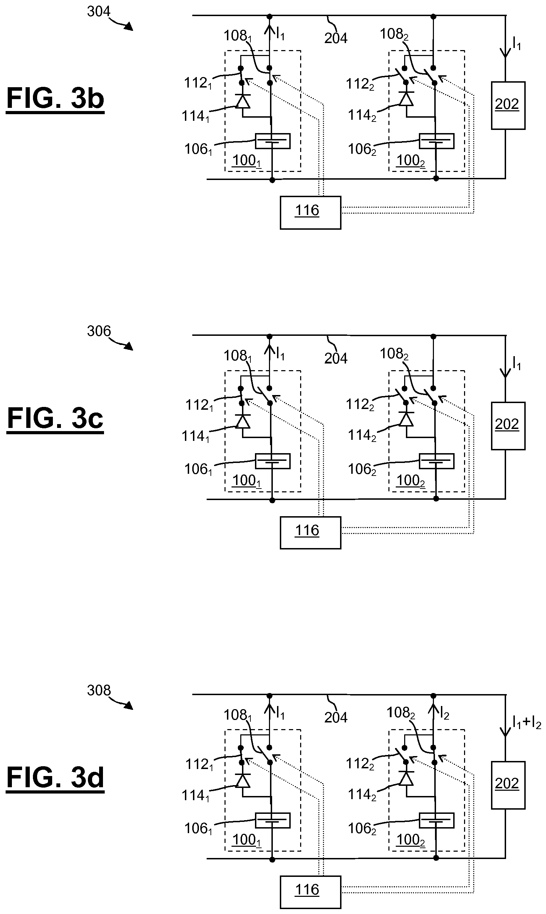

Puis, après une période d'utilisation du dispositif de stockage 100₁, l'alimentation de l'auxiliaire est basculée du dispositif de stockage 100₁ au dispositif de stockage 100₂. Ce basculement est précédé d'une étape permutation de la décharge au sein du dispositif de stockage 100₁. Cette étapes de permutation est réalisée en deux temps, comme représenté sur les FIGURES 3b et 3c.

D'abord, le contacteur secondaire 112₁ du dispositif de stockage 100₁ est fermé. Ainsi, on obtient la configuration 304, représentée sur la FIGURE 3b, et dans laquelle :
- le contacteur principal 108₁ et le contacteur secondaire 112₁ du dispositif de stockage 100₁ sont fermés ; et
- le contacteur principal 108₂ et le contacteur secondaire 112₂ du dispositif de stockage 100₂ sont ouverts.

Dans cette configuration, l'auxiliaire 202 continue d'être alimenté uniquement par le dispositif de stockage 100₁. En d'autres termes, la valeur du courant entrant dans l'auxiliaire 202 est sensiblement égale à la valeur du courant I1 sortant du dispositif de stockage 100₁.

Puis, le contacteur principal 108₁ du dispositif de stockage 100₁ est passé en position ouverte. Ainsi, on obtient la configuration 306, représentée sur la FIGURE 3c, et dans laquelle :
- le contacteur principal 108₁ du dispositif de stockage 100₁ est ouvert et le contacteur secondaire 112₁ du dispositif de stockage 100₁ est fermé ; et
- le contacteur principal 108₂ et le contacteur secondaire 112₂ du dispositif de stockage 100₂ sont ouverts.

Dans cette configuration, l'auxiliaire 202 continue toujours d'être alimenté uniquement par le dispositif de stockage 100₁. En d'autres termes, la valeur du courant entrant dans l'auxiliaire 202 est sensiblement égale à la valeur du courant I1 sortant du dispositif de stockage 100₁.

L'étape de permutation de la décharge au sein du dispositif de stockage 100₁ est alors terminée.

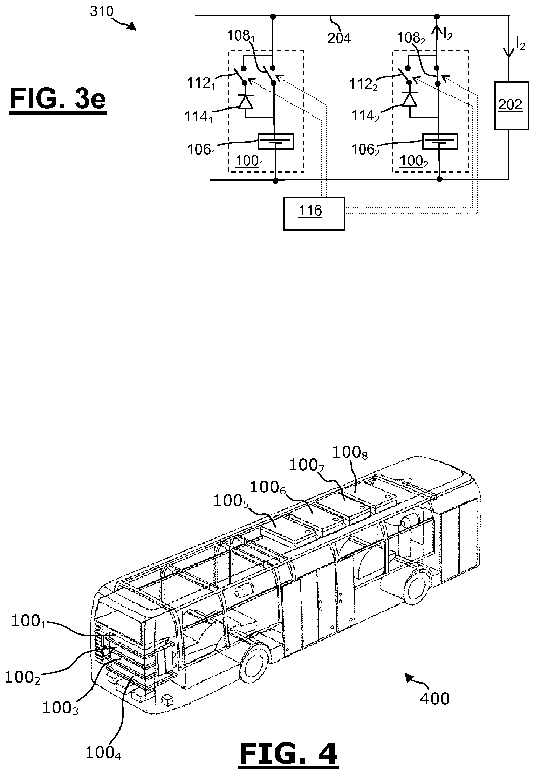

Après la permutation de la décharge au sein du dispositif de stockage 100₁, l'alimentation de l'auxiliaire 202 peut être basculée vers le dispositif de stockage 100₂. Ce basculement a lieu en deux temps comme, représenté sur les FIGURES 3d et 3e.

D'abord, le contacteur principal 108₂ du dispositif de stockage 100₂ est fermé. Le dispositif de stockage 100₂ commence donc à être utilisé, en même temps que le dispositif de stockage 100₁. Ainsi, on obtient la configuration 308, représentée sur la FIGURE 3d, et dans laquelle :
- le contacteur principal 108₁ du dispositif de stockage 100₁ est ouvert et le contacteur secondaire 112₁ du dispositif de stockage 100₁ est fermé ; et
- le contacteur principal 108₂ du dispositif de stockage 100₂ est fermé et le contacteur secondaire 112₂ du dispositif de stockage 100₂ est ouvert.

Dans cette configuration, l'auxiliaire 202 reçoit la somme des courants I₁ délivré par le dispositif de stockage 100₁ et I₂ délivré par le dispositif de stockage 100₂.

Dans cette configuration 308, on comprend bien que le courant I₂ délivré par le dispositif de stockage 100₂ ne peut pas causer un retour de courant vers le dispositif de stockage 100₁ et dégrader le module de stockage 106₁. En effet, dans la présente invention, un tel risque est supprimé par le fait que le dispositif de stockage 100₁ est utilisé au travers de la branche de dérivation qui comprend la diode 114₁ et cette dernière évite un retour de courant dans le module de stockage 106₁.

De plus, cette configuration 308 permet de basculer l'alimentation sur le dispositif de stockage 100₂, sans avoir de coupure de courant lors dudit basculement. En d'autres termes, l'auxiliaire 202 peut fonctionner sans discontinuité et indépendamment de la gestion des dispositifs de stockage d'énergie 100ᵢ.

Puis, l'étape de basculement est terminée en ouvrant le contacteur secondaire 112₁ du dispositif de stockage 100₁. Ainsi, on obtient la configuration 310, représentée sur la FIGURE 3e, dans laquelle :
- le contacteur principal 108₁ et le contacteur secondaire 112₁ du dispositif de stockage 100₁ sont ouverts ; et
- le contacteur principal 108₂ du dispositif de stockage 100₂ est fermé et le contacteur secondaire 112₂ du dispositif de stockage 100₂ est ouvert.

Dans cette configuration, l'auxiliaire 202 reçoit uniquement le courant I₂ délivré par le dispositif de stockage 100₂.

Les configurations 304-310 peuvent être répétées avec le dispositif de stockage 100₂.

La FIGURE 4 est une représentation schématique d'un exemple de réalisation non limitatif d'un véhicule selon l'invention.

Le véhicule, 400 représenté sur la FIGURE 4, est un bus électrique comportant un ou plusieurs moteurs électriques (non représentés).

Le véhicule 400 comprend un système rechargeable de stockage d'énergie électrique, qui peut être le système 200 de la FIGURE 2 muni de huit dispositifs 100₁-100₈ branchés en parallèle les uns avec les autres.

Les dispositifs 100₁-100₈ sont tous identiques et fournissent une même puissance nominale.

Les dispositifs 100₁-100₄ sont aménagés du côté d'une paroi arrière du bus 400 et les dispositifs 100₅-100₈ sont aménagés dans un logement prévu dans une paroi supérieure du bus 400.

Le bus électrique 400 est mis en mouvement exclusivement par l'énergie électrique fournie par les dispositifs 100₁-100₈, utilisés à tour de rôle ou en même temps.

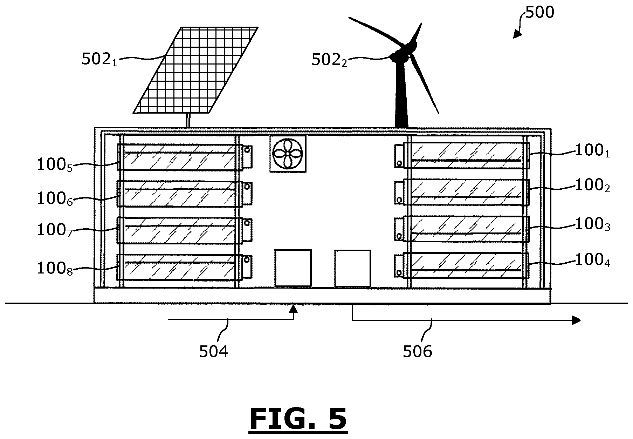

La FIGURE 5 est une représentation schématique d'un exemple non limitatif d'une installation d'alimentation électrique selon l'invention.

L'installation d'alimentation électrique 500, représentée sur la FIGURE 5, peut être une station de recharge électrique pour véhicules électriques tels que des bus électriques ou des voitures électriques, une installation d'alimentation d'un bâtiment, d'un complexe tel qu'un terrain de football, d'un appareil de communication tel qu'une borne WIFI ou une antenne, etc.

L'installation 500 comprend un système rechargeable de stockage d'énergie électrique qui peut être le système 200 de la FIGURE 2 muni de huit dispositifs 100₁-100₈ branchés en parallèle les uns avec les autres.

Les dispositifs 100₁-100₈ sont tous identiques et fournissent une même puissance nominale.

Un ou plusieurs moyens 502 de production d'énergie électrique à partir d'une source renouvelable, tels que par exemple des panneaux solaires 502₁ ou une ou des éoliennes 502₂, peuvent être utilisés pour recharger les modules 100₁-100₈. Les moyens de production 502 peuvent faire partie, ou non, de l'installation 500.

Alternativement, ou en plus, chaque dispositif 100₁-100₈ peut être rechargé depuis un réseau de distribution d'énergie électrique, matérialisé par la ligne référencée 504.

L'installation 500 permet d'alimenter une borne de charge, un complexe, et plus généralement une entité, par l'intermédiaire d'un réseau électrique matérialisé par la ligne référencée 506.

Bien entendu, l'invention n'est pas limitée aux exemples détaillés ci-dessus. En particulier, le nombre de dispositifs de stockage n'est pas limité à ceux donnés dans les exemples décrits ci-dessus. En particulier, dans le système rechargeable de stockage d'énergie électrique, le nombre de dispositifs dépend de l'autonomie et de la puissance souhaitée.

Le véhicule 400 comprend un système rechargeable de stockage d'énergie électrique, qui peut être le système 200 de la FIGURE 2 muni de huit dispositifs 100₁-100₈ branchés en parallèle les uns avec les autres.

Les dispositifs 100₁-100₈ sont tous identiques et fournissent une même puissance nominale.

Les dispositifs 100₁-100₄ sont aménagés du côté d'une paroi arrière du bus 400 et les dispositifs 100₅-100₈ sont aménagés dans un logement prévu dans une paroi supérieure du bus 400.

Le bus électrique 400 est mis en mouvement exclusivement par l'énergie électrique fournie par les dispositifs 100₁-100₈, utilisés à tour de rôle ou en même temps.

La FIGURE 5 est une représentation schématique d'un exemple non limitatif d'une installation d'alimentation électrique selon l'invention.

L'installation d'alimentation électrique 500, représentée sur la FIGURE 5, peut être une station de recharge électrique pour véhicules électriques tels que des bus électriques ou des voitures électriques, une installation d'alimentation d'un bâtiment, d'un complexe tel qu'un terrain de football, d'un appareil de communication tel qu'une borne WIFI ou une antenne, etc.

L'installation 500 comprend un système rechargeable de stockage d'énergie électrique qui peut être le système 200 de la FIGURE 2 muni de huit dispositifs 100₁-100₈ branchés en parallèle les uns avec les autres.

Les dispositifs 100₁-100₈ sont tous identiques et fournissent une même puissance nominale.

Un ou plusieurs moyens 502 de production d'énergie électrique à partir d'une source renouvelable, tels que par exemple des panneaux solaires 502₁ ou une ou des éoliennes 502₂, peuvent être utilisés pour recharger les modules 100₁-100₈. Les moyens de production 502 peuvent faire partie, ou non, de l'installation 500.

Alternativement, ou en plus, chaque dispositif 100₁-100₈ peut être rechargé depuis un réseau de distribution d'énergie électrique, matérialisé par la ligne référencée 504.

L'installation 500 permet d'alimenter une borne de charge, un complexe, et plus généralement une entité, par l'intermédiaire d'un réseau électrique matérialisé par la ligne référencée 506.

Bien entendu, l'invention n'est pas limitée aux exemples détaillés ci-dessus. En particulier, le nombre de dispositifs de stockage n'est pas limité à ceux donnés dans les exemples décrits ci-dessus. En particulier, dans le système rechargeable de stockage d'énergie électrique, le nombre de dispositifs dépend de l'autonomie et de la puissance souhaitée.

## Revendications

1. Système (200) rechargeable de stockage d'énergie électrique comprenant :
• plusieurs dispositifs (100₁-100ₙ) rechargeables de stockage d'énergie électrique, agencés en parallèle les uns avec les autres, chaque dispositif (100) rechargeable de stockage d'énergie électrique comprenant :
- un module (106) de stockage comprenant au moins une batterie rechargeable ;
- au moins un contacteur commandable (108), dit principal, pour relier, ou non, ledit module de stockage (106) à un circuit électrique ;
- une branche de dérivation (110) dudit contacteur principal (108), ladite branche de dérivation (110) comprenant, montés en série :
▪ au moins un contacteur commandable (112), dit secondaire, pour fermer ou ouvrir ladite branche de dérivation (110), et
▪ au moins une diode (114) passante uniquement dans le sens de décharge dudit module de stockage (106) ; et
• un unique module de commande (116) de l'au moins un contacteur principal (108), respectivement de l'au moins un contacteur secondaire (112), commun à plusieurs, en particulier à tous les, dispositifs de stockage (100₁-100ₙ) ;
**caractérisé en ce que** l'unique module de commande (116) est configuré pour réaliser :
• d'abord, au sein d'un premier dispositif de stockage, une permutation de la décharge vers la branche de dérivation dudit dispositif de stockage, en commandant :
- d'abord, la fermeture (ou le maintien en position fermée) du contacteur secondaire (112),
- puis l'ouverture de l'au moins un contacteur principal (108) ;
• puis, un basculement de la décharge dudit premier dispositif de stockage vers un deuxième dispositif de stockage en commandant :
- d'abord la fermeture de l'au moins un contacteur principal (108₂) du deuxième dispositif de stockage (100₂),
- puis l'ouverture du contacteur secondaire (112₁) dudit premier dispositif de stockage (100₁).

2. Système (200) selon la revendication précédente, **caractérisé en ce qu'**au moins un dispositif rechargeable de stockage d'énergie électrique comprend plusieurs contacteurs principaux en série avec le module de stockage (106) dudit dispositif, disposés, chacun, du côté d'une borne électrique dudit module de stockage (106).

3. Véhicule électrique (400) comprenant un système de stockage (200) selon l'une quelconque des revendications 1 ou 2.

4. Installation (500) stationnaire comprenant un système de stockage (200) selon l'une quelconque des revendications 1 ou 2.

## Patentansprüche

1. Wiederaufladbares System (200) zur Speicherung elektrischer Energie, umfassend:
• mehrere wiederaufladbare Vorrichtungen (100₁-100ₙ) zur Speicherung elektrischer Energie, die parallel zueinander angeordnet sind, wobei jede wiederaufladbare Vorrichtung (100) zur Speicherung elektrischer Energie Folgendes umfasst:
- ein Speichermodul (106), das mindestens eine wiederaufladbare Batterie umfasst;
- mindestens ein steuerbares Schütz (108), das so genannte Hauptschütz, um das Speichermodul (106) mit einem Stromkreis zu verbinden oder nicht;
- einen Umgehungszweig (110) des Hauptschützes (108), wobei der Umgehungszweig (110), in Reihe geschaltet, Folgendes umfasst:
▪ mindestens ein steuerbares Schütz (112), das so genannte Nebenschütz, zum Schließen oder Öffnen des Umgehungszweigs (110), und
▪ mindestens eine Diode (114), die nur in der Entladerichtung des Speichermoduls (106) durchlässig ist; und
▪ ein einziges Steuermodul (116) des mindestens einen Hauptschützes (108) bzw. des mindestens einen Nebenschützes (112), das mehreren, insbesondere allen, Speichervorrichtungen (100₁-100ₙ) gemeinsam ist;
**dadurch gekennzeichnet, dass** das einzige Steuermodul (116) dazu konfiguriert ist, Folgendes durchzuführen:
• zunächst, innerhalb einer ersten Speichervorrichtung, eine Umschaltung der Entladung zum Umgehungszweig der Speichervorrichtung, durch Steuern:
- zunächst des Schließens (oder Haltens in geschlossener Stellung) des Nebenschützes (112),
- dann des Öffnens des mindestens einen Hauptschützes (108);
• dann eine Umschaltung der Entladung von der ersten Speichervorrichtung zu einer zweiten Speichervorrichtung durch Steuern:
- zunächst des Schließens des mindestens einen Hauptschützes (108₂) der zweiten Speichervorrichtung (100₂),
- dann des Öffnens des Nebenschützes (112₁) der ersten Speichervorrichtung (100₁).

2. System (200) nach dem vorhergehenden Anspruch,
**dadurch gekennzeichnet, dass** mindestens eine wiederaufladbare Vorrichtung zum Speichern von elektrischer Energie mehrere Hauptschütze in Reihe mit dem Speichermodul (106) der Vorrichtung umfasst, die jeweils auf der Seite eines elektrischen Anschlusses des Speichermoduls (106) angeordnet sind.

3. Elektrofahrzeug (400), umfassend ein Speichersystem (200) nach einem der Ansprüche 1 oder 2.

4. Stationäre Anlage (500), umfassend ein Speichersystem (200) nach einem der Ansprüche 1 oder 2.

## Claims

1. Rechargeable electrical energy storage system (200) comprising:
• a plurality of rechargeable electrical energy storage devices (100₁-100ₙ), arranged in parallel with one another, each rechargeable electrical energy storage device (100) comprising:
- a storage module (106) comprising at least one rechargeable battery;
- at least one controllable contactor (108), said main contactor, for connecting, or not, said storage module (106) to an electrical circuit;
- a bypass branch (110) of said main contactor (108), said bypass branch (110) comprising, connected in series:
▪ at least one controllable contactor (112), said secondary contactor, for closing or opening said bypass branch (110), and
▪ at least one diode (114) conducting current only in the discharge direction of said storage module (106); and
• a single control module (116) for controlling the at least one main contactor (108), respectively the at least one secondary contactor (112), common to a plurality of, in particular to all of, the storage devices (100₁-100ₙ);
**characterized in that** the single control module (116) is designed to perform:
• first, within a first storage device, a shift of the discharge toward the bypass branch of said storage device, by controlling:
- first the closure (or the holding in the closed position) of the secondary contactor (112),
- then the opening of the at least one main contactor (108);
• then switching of the discharge from said first storage device to a second storage device by controlling:
- first the closure of the at least one main contactor (108₂) of the second storage device (100₂),
- then the opening of the secondary contactor (112₁) of said first storage device (100₁).

2. System (200) according to the preceding claim, **characterized in that** at least one rechargeable electrical energy storage device comprises a plurality of main contactors connected in series with the storage module (106) of said device, each arranged on the side of an electrical terminal of said storage module (106).

3. Electric vehicle (400) comprising a storage system (200) according to any one of claims 1 and 2.

4. Stationary installation (500) comprising a storage system (200) according to any one of claims 1 and 2.
